# EUROPEAN PATENT APPLICATION

(11) **EP 4 568 069 A1**
(43) Date of publication of application: **11.06.2025**
(21) Application number: 23214209.1
(22) Date of filing: 05.12.2023
(51) Int. Cl.: H02K 1/28, H02K 16/02

(54) **ROTOR CONNECTION TO SHAFT FOR AXIAL FLUX MOTOR**

(71) Applicant: Schaeffler Technologies AG & Co. KG, 91074 Herzogenaurach (DE)
(72) Inventor: Mechi, Marco, 80687 München (DE); Marc, Daniel, 80687 München (DE); Carli, Daniele, 80687 München (DE); Matteini, Davide, 80687 München (DE); Manzo, Gianluigi, 80687 München (DE); Barsanti, Tommaso, 80687 München (DE)
(74) Representative: Vitesco Technologies

(57) **Abstract**

The present invention relates to a yokeless and segmented armature axial flux electric machine (10), having a shaft (12), at least one bearing assembly (18a, 18b) mounted to the shaft (12), a stator (38), and at least one rotor (40a,40b) mounted to the shaft (12) such that the rotor (40a,40b) is adjacent the stator (38) and the bearing assembly (18a,18b), and there is a gap (60a,60b) between the at least one rotor (40a,40b) and the stator (38). In an embodiment, the yokeless and segmented armature axial flux electric machine (10) includes a connection structure connecting the stator (38) and the rotor (40a,40b) to the shaft (12). The rotor (40a,40b) and the shaft (12) rotate relative to the stator (38).

## Description

The invention relates generally to a connection structure for a yokeless and segmented armature axial flux machine, where the connection structure facilitates a connection between two rotors and a shaft, such that there is a desired gap between the first rotor and the stator, and another desired gap between the second rotor and the stator, as well as proper angular phasing between the rotors and the stator.

Many different types of electrical machines (both motors and generators) are generally known and are used for many different applications. Electrical machines, such as brushless DC (BLDC), synchronous or asynchronous AC, switched reluctance (SRM), axial flux (AF), have various advantages and disadvantages with regard to geometry, driving circuit (requiring a digital signal processor (DSP) or a simple microcontroller), required sensors (current sensor, position sensor), and operating characteristics (cogging, torque ripple), etc.

Axial flux machines typically have two different variants (depending on the orientation of the magnets on the two rotor discs): the torus type (which has a stator yoke), and the yokeless and segmented armature type (which has no stator yoke). Axial flux machines typically have higher power and torque density compared to radial flux machines. Yokeless and segmented armature axial flux machines also have higher efficiency compared to radial flux machines because of the absence of the stator yoke and its associated losses.

However, yokeless and segmented armature axial flux machines present some technical challenges. Compactness of a yokeless and segmented armature axial flux machine requires accurate part position and rigidness for control of the dimension of the air gap (i.e., distance between rotor and stator). This is more challenging for a rotor-stator-rotor (RSR) arrangement having two air gaps, and the rotors must be mutually angularly phased to get the optimum machine performance.

The mechanical positioning and stability of each rotor during assembly is challenging, as each axial gap must be as small as possible to limit the magnetic reluctance. The air gap of axial flux machines is not defined by construction (as in radial machines) but must be achieved by assembly, as a result of part precision and using a reduced number of components, resulting in a short assembly tolerance chain. Additionally, the relative angular position of the two rotors must also be set during assembly, where accurate and reliable phasing between the pole pairs on the rotors is ensured.

Therefore, there exists a need for an axial flux machine having two rotors which minimizes the gap variability between each rotor and the stator, and also has desired phasing between the two rotors.

An example of a permanent magnet electric machine is known in WO 2010/092400, titled "Electric Machine - Cooling."

An example of an axial motor is US 2015/0364956, titled "Pole Shoe Cooling Gap For Axial Motor."

It is therefore an object of the present invention to facilitate the connection of one or more rotors to a shaft and minimize the gap variability between a stator and the rotors.

The present invention relates to axial flux machines, such as yokeless and segmented armature axial flux machines. The present invention includes a connection structure which facilitates the connection of one or more rotors to a shaft and simplifies the assembly process. Furthermore, the present invention facilitates the preloading of bearings on the shaft through the utilization of rotor flanges and locknuts. This enhances the overall rigidity of the rotor assembly and optimizes the load-bearing capacity of the bearings.

In an embodiment, the present invention provides a machine connection structure which reduces the tolerance chain for optimum air gap dimension control. Additionally, the described machine connection structure facilitates a rotor connection to a shaft, and automation of the assembly of the rotors such that the rotors have desired angular phasing.

In an embodiment, the present invention provides a connection structure of a yokeless and segmented armature axial flux electric machine, which includes two rotors, one shaft, two bearings, locknuts, and one stator with a bearing seat, or bearing housing feature, in which the bearings are mounted.

In an embodiment, during assembly the bearing assemblies are stroke control assembled on the shaft in a back-to-back configuration, forming a bearing subassembly. The bearing assemblies are then positioned between an inner ring and a shaft such that the outer race of one of the bearing assemblies is adjacent to a flange portion of the inner ring. Subsequently, the stator is mounted over the shaft-bearing subassembly until the bearings engage the housing, and the bearings are secured in place by a bearing nut

In an embodiment, the shaft includes involute splines, which are machined on the outer diameter of the shaft. There are correspondingly shaped modified involute splines machined on the inner diameter of each rotor. An engagement spline, also referred to as a wide spline, or "double spline" is machined on the shaft in between two of the other involute splines, and one spline is omitted from the involute splines on the rotors. The modified involute splines create a keyway feature, or "poka-yoke," which facilitates correct angular positioning of the rotor(s) during assembly.

In an embodiment, each rotor has several magnets, each magnet having magnetic poles. The omitted spline of each rotor is located on the symmetry plane between the two magnetic poles. This allows the rotors to be managed as identical parts, which simplifies the assembly. Because of the keyway features, the magnets are properly aligned when the rotors are assembled to the shaft, such that the rotors are positioned with the correct magnetic pole pitch (i.e., each north pole faces a corresponding south pole as required for correct motor operation). This eliminates the need to rotate or reposition the rotors during assembly.

Once the rotors are mounted to the shaft, the rotors are held in place by locknuts, which are also attached to the shaft. The yokeless and segmented armature axial flux electric machine of the present invention has a simplified assembly of the rotors to the shaft. Only the bearing nut and locknuts need to be secured in place, and the use of axially inserted screws is eliminated (eliminating sixteen screwing assembly operations).

The connection structure for a yokeless and segmented armature axial flux electric machine according to the present invention improves the accuracy of the control of the air gaps between the stator and each rotor by reducing the number of parts in the tolerance chain and improves torque and rotor centering as a result of the use of the involute splines on the rotors and the shaft. The connection structure for a yokeless and segmented armature axial flux electric machine according to the present invention also includes a keyway feature, or "poka-yoke," having modified spline geometry which facilitates specific positioning of each rotor to allow mirror assembly of the rotors without rotatably adjusting the rotors, and facilitates securing the rotors with locknuts instead of screws, reducing assembly steps.

This object may be achieved by the connection structure for a yokeless and segmented armature axial flux electric machine according to independent claim 1, and the method according to independent claim 11. Preferred embodiments are given in the dependent claims.

In an embodiment, the present invention is a yokeless and segmented armature axial flux electric machine, having a shaft, at least one bearing assembly mounted to the shaft, a stator, and at least one rotor mounted to the shaft such that the rotor is adjacent the stator and the bearing assembly, and there is a gap between the rotor and the stator. In an embodiment, the yokeless and segmented armature axial flux electric machine includes a connection structure connecting the stator and the rotor to the shaft. The rotor and the shaft rotate relative to the stator.

In an embodiment, the engagement spline is integrally formed as part of the shaft, and at least one engagement surface is integrally formed as part of the rotor. The engagement spline is in contact with the engagement surface when the rotor is mounted to the shaft.

In an embodiment, a plurality of external splines is integrally formed as part of the shaft, such that the engagement spline is located between two of the external splines, and a plurality of inner splines is integrally formed as part of the rotor, and the engagement surface is located between two of the inner splines. The external splines are engaged with the inner splines when the rotor is mounted to the shaft.

In an embodiment, the yokeless and segmented armature axial flux electric machine includes a first rotor mounted to the shaft such that the first rotor is adjacent the stator and the bearing assembly, and there is a first gap between the first rotor and the stator. In an embodiment, the yokeless and segmented armature axial flux electric machine includes a second rotor mounted to the shaft such that the second rotor is adjacent the stator and the bearing assembly and there is a second gap between the second rotor and the stator. In an embodiment, the width of the first gap is approximately the same as the width of the second gap.

In an embodiment, the first rotor is in a mirrored orientation relative to the second rotor.

In an embodiment, the connection structure includes a second engagement spline integrally formed as part of the shaft on the opposite side of a mounting surface in reference to the engagement spline, and a second engagement surface integrally formed as part of the second rotor, where the engagement surface is integrally formed as part of the first rotor. The second engagement spline is in contact with the second engagement surface when the second rotor is mounted to the shaft.

In an embodiment, the yokeless and segmented armature axial flux electric machine includes a skew angle. The engagement spline and the second engagement spline are offset relative to one another by an angular distance such that when the when the first rotor and the second rotor are mounted on the shaft, the first rotor and the second rotor are angularly offset from one another by a magnitude which corresponds to the skew angle.

In an embodiment, the yokeless and segmented armature axial flux electric machine of the present invention includes a first plurality of external splines integrally formed as part of the shaft, the engagement spline disposed between two of the first plurality of external splines, and a second plurality of external splines integrally formed as part of the shaft, the second engagement spline disposed between two of the second plurality of external splines. In an embodiment, the first rotor is mounted to the first plurality of external splines and the second rotor is mounted to the second plurality of external splines.

In an embodiment, a plurality of inner splines is integrally formed as part of the first rotor, such that the engagement surface is disposed between two of the inner splines integrally formed as part of the first rotor. A plurality of inner splines is integrally formed as part of the second rotor, and the second engagement surface is disposed between two of the inner splines integrally formed as part of the second rotor. The first plurality of external splines are engaged with the inner splines integrally formed as part of the first rotor when the first rotor is mounted to the shaft, and the a second plurality of external splines are engaged with the inner splines integrally formed as part of the second rotor when the second rotor is mounted to the shaft.

In an embodiment, a first plurality of magnets is part of the first rotor; and, and a second plurality of magnets is part of the second rotor. In an embodiment, the first plurality of magnets is aligned with the second plurality of magnets when the first rotor is mounted to the shaft and when the second rotor is mounted to the shaft.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:
Fig. 1 is a perspective view of a yokeless and segmented armature axial flux electric machine having a construction structure, according to embodiments of the present invention;
Fig. 2 is a perspective view of a shaft which is part of a yokeless and segmented armature axial flux electric machine having a construction structure, according to embodiments of the present invention;
Fig. 3A is a sectional view taken along lines 3A-3A in Fig. 1;
Fig. 3B is an enlarged view of the noted portion in Fig. 3A;
Fig. 4 is a perspective view of a rotor used as part of yokeless and segmented armature axial flux electric machine having a construction structure, according to embodiments of the present invention;

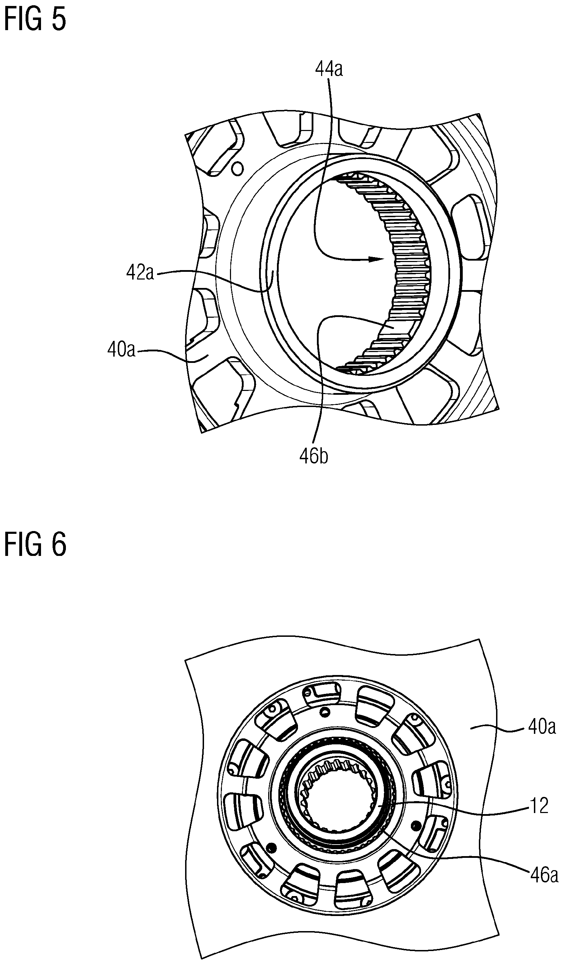

Fig. 5 is an enlarged view of a portion of Fig. 4;
Fig. 6 is an enlarged perspective view of a shaft connected to two rotors used as part of a yokeless and segmented armature axial flux electric machine having a construction structure, according to embodiments of the present invention;
Fig. 7 is a first angled sectional view of several components of a yokeless and segmented armature axial flux electric machine having a construction structure, according to embodiments of the present invention;
Fig. 8 is a second angled sectional view of several components of a yokeless and segmented armature axial flux electric machine having a construction structure, according to embodiments of the present invention;

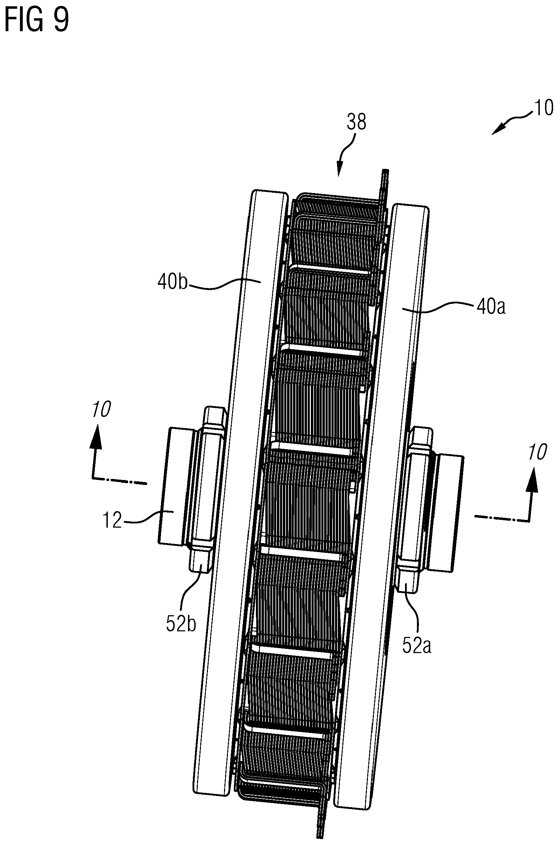

Fig. 9 is a perspective view of a yokeless and segmented armature axial flux electric machine having a construction structure, with the outer housing removed, according to embodiments of the present invention; and

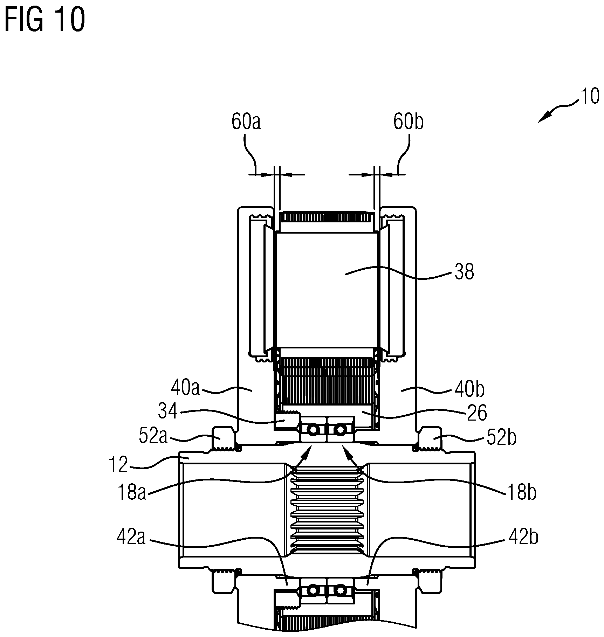

Fig. 10 is a partial sectional view taken along lines 10-10 of Fig. 9.

The following description of the preferred embodiment(s) is merely exemplary in nature and is in no way intended to limit the invention, its application, or uses.

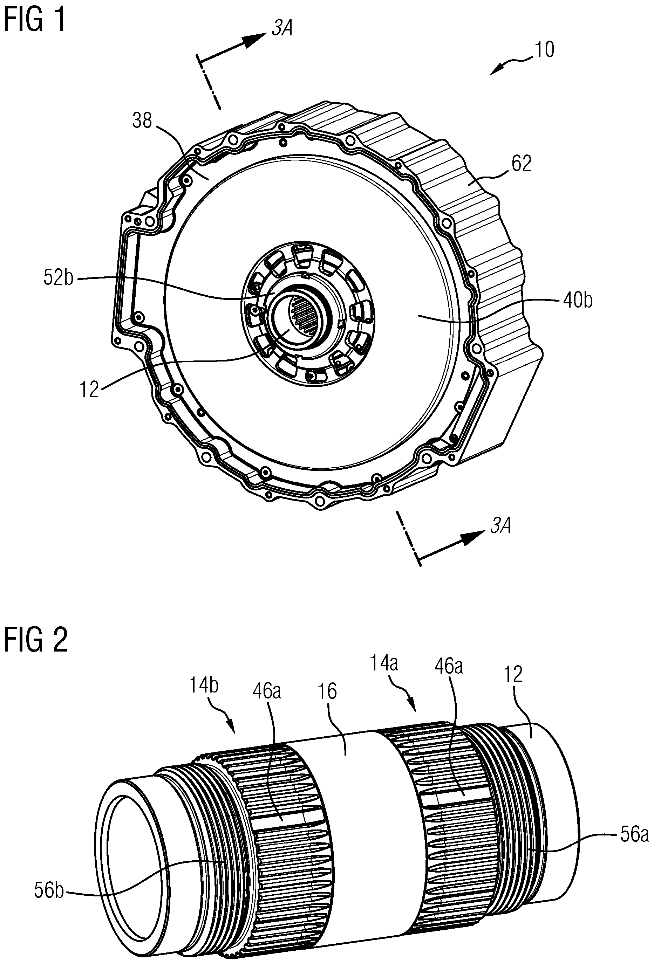

An embodiment of a yokeless and segmented armature axial flux electric machine having a connection structure according to the present invention is shown in Fig. 1, generally at 10. Referring to the Figs. generally, the machine 10 includes a shaft 12 having a first plurality of external splines, shown generally at 14a, and second plurality of external splines, shown generally at 14b, with a mounting surface 16 between each of the pluralities of external splines 14a, 14b.

Mounted to the mounting surface 16 is a first bearing assembly 18a and a second bearing assembly 18b, which are adjacent to one another. More specifically, each bearing assembly 18a, 18b has an inner race 20a,20b, an outer race 22a,22b, and a ball bearing 24a,24b. The inner race 20a,20b of each bearing assembly 18a, 18b is mounted to the mounting surface 16. Mounted to the outer race 22a,22b of the bearing assemblies 18a, 18b is an inner ring 26. The inner ring 26 has a flange portion 28 which is adjacent a side surface 30 of the outer race 22b of the second bearing assembly 18b.

The inner ring 26 also includes an inner threaded surface 32 which is integrally formed as part of the inner ring 26 on the opposite side of the inner ring 26 in reference to the flange portion 28. The machine 10 also includes a bearing nut 34, which has an external threaded surface 36, and the external threaded surface 36 is engaged with the inner threaded surface 32 when the bearing nut 34 is attached to the inner ring 26.

The inner ring 26 is part of a stator 38, and the stator 38 is mounted to the bearing assemblies 18a, 18b such that an inner surface 26a of the inner ring 26 (where the inner surface 26a is located between the flange portion 28 and the inner threaded surface 32) is mounted to the outer race 22a,22b of each bearing assembly 18a,18b. As the bearing nut 34 is attached to the inner ring 26 and tightened, there is a clamping force applied to the outer races 22a,22b by the flange portion 28 and the bearing nut 34, which maintains the position of the stator 38 relative to the bearing assemblies 18a, 18b.

The inner ring 26 is part of a stator 38, and the stator 38 is located between two rotors 40a,40b. Both rotors 40a,40b have an inner flange portion 42a,42b, and integrally formed as part of each of the inner flange portions 42a,42b is a plurality of inner splines 44a,44b, respectively. Also included are keyway features to ensure that each of the rotors 40a,40b are properly oriented relative to one another, and to the shaft 12, once assembled. The keyway feature which provides proper positioning of the first rotor 40a on the shaft 12 is described, but it is within the scope of the invention that the keyway feature to provide proper positioning of the second rotor 40b on the shaft 12 is similar.

The keyway feature includes a wide spline, or engagement spline, 46a integrally formed as part of the shaft 12 such that the engagement spline 46a is disposed between two of the first plurality of external splines 14a. In the embodiment shown, the engagement spline 46a is the width of two of the plurality of external splines 14a, but it is within the scope of the invention that other widths may be used. The keyway feature also includes an engagement surface 46b which is located between two of the plurality of inner splines 44a. The first rotor 40a is mounted to the shaft 12 such that the flange portion 42a is in contact with the inner race 20a of the first bearing assembly 18a. In order for the first rotor 40a to be properly mounted on the shaft 12, the rotor 40a must be positioned such that the engagement spline 46a is in contact with the engagement surface 46b and located in between the two inner splines 44a on each side of the engagement surface 46b, and the inner splines 44a engage with the first plurality of inner splines 14a. Because there is only one engagement spline 46a and only one engagement surface 46b, there is only a single orientation that may be used to mount the rotor 40a to the shaft 12. The second rotor 40b is mounted to the shaft 12 in a similar manner, but in an orientation which is mirrored relative to the first rotor 40a, where the second rotor 40b is located on the opposite side of the bearing assemblies 18a, 18b.

The first rotor 40a, includes a plurality of magnets, shown generally at 48a, and the second rotor 40b also includes a plurality of magnets, shown generally at 48b. The keyway features being used to ensure proper orientation of the rotors 40a,40b on the shaft 12 and relative to one another also achieves proper orientation of the pluralities of magnets 48a,48b relative to one another.

Adjacent the second rotor 40b and mounted to the shaft 12 is an outer plate 50, which includes a protrusion 52, where the other plate 50 is part of a sensor tone wheel.

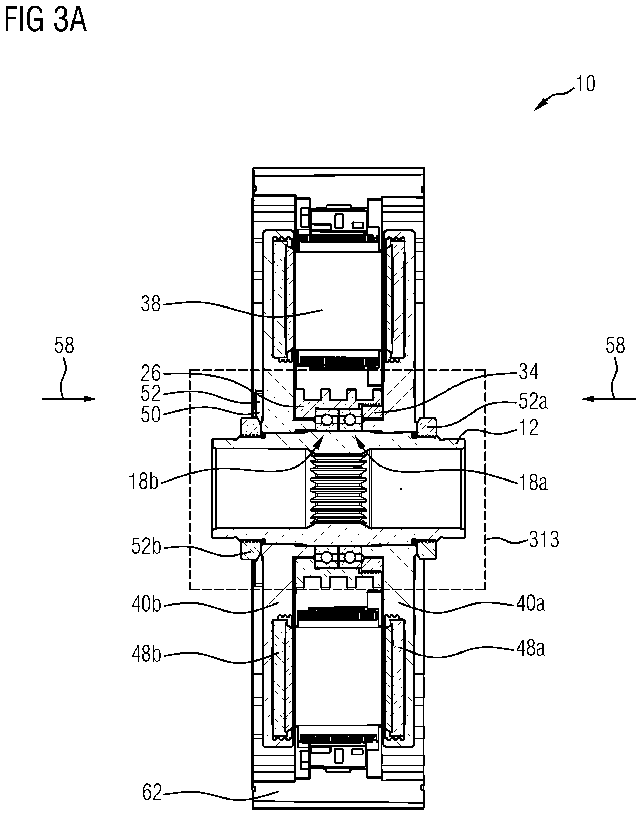

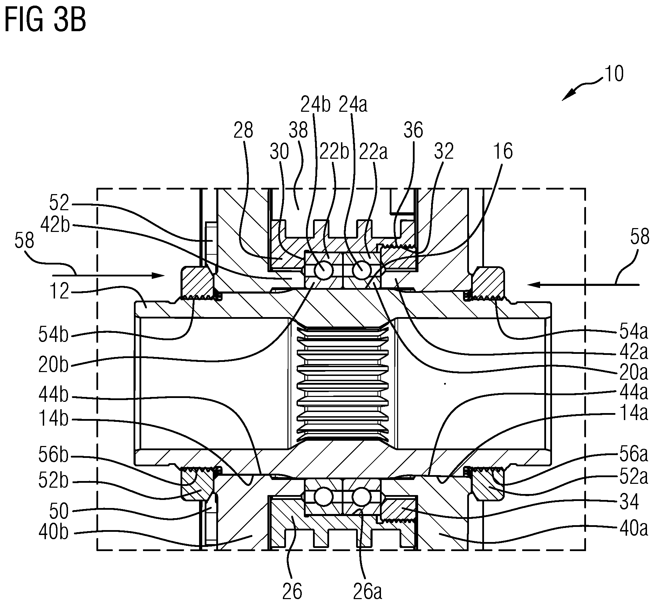

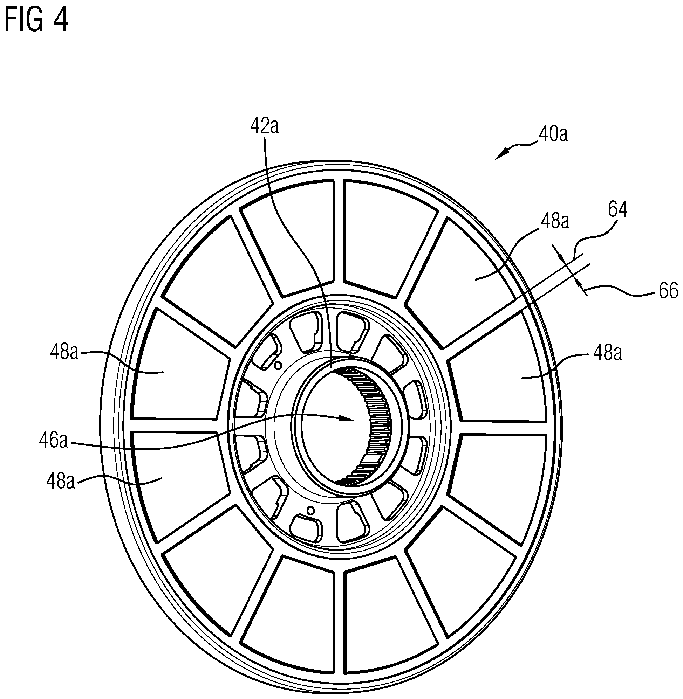

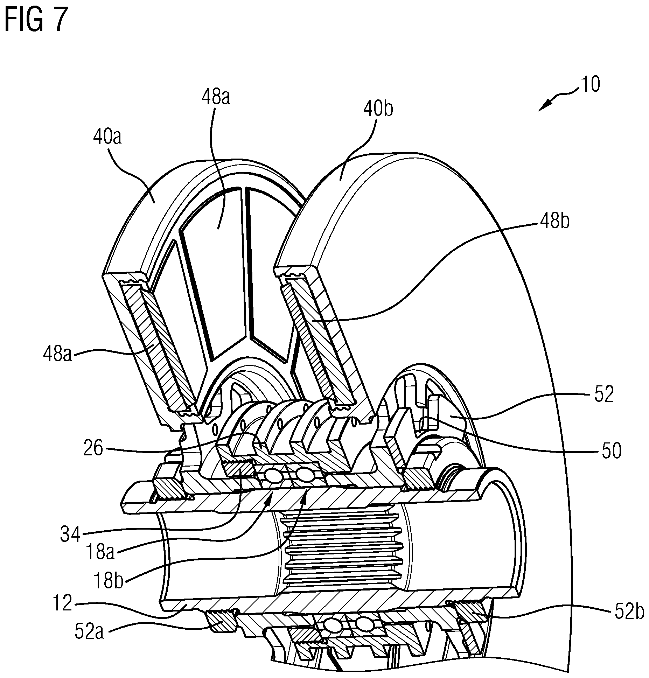

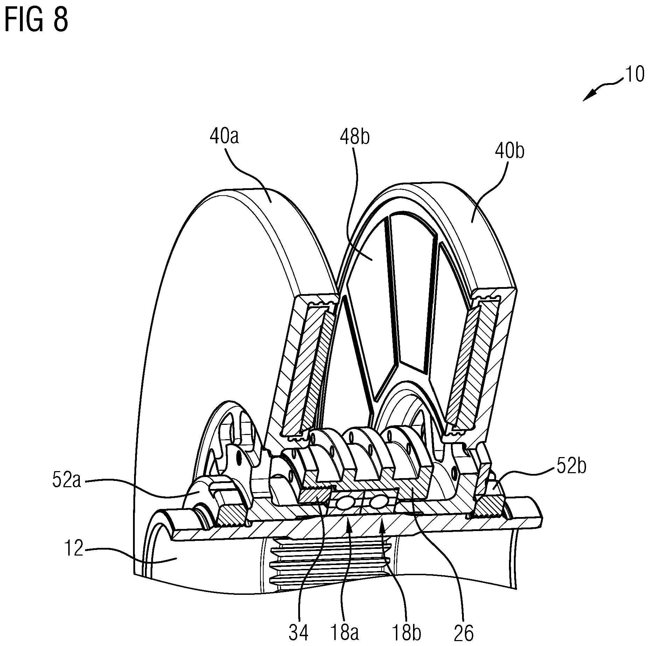

Referring now to Fig. 4, extending through the rotor 40a is a plane of symmetry 64, where the rotor 40a is substantially symmetrical on each side of the plane of symmetry 64. Because the rotor 40a is substantially symmetrical on each side of the plane of symmetry 64, the orientation of the rotor 40a may be rotated 180° about the plane of symmetry 64 to have an orientation which is the mirror opposite of the orientation shown in Fig. 4. Therefore, when the two rotors 40a,40b are used, the second rotor 40b may be a mirror opposite orientation of the first rotor 40a, as shown in Figs. 3A-3B and 7-8.

In an embodiment, the rotors 40a,40b may be mounted to the shaft 12 such that the rotors 40a,40b have a skew angle relative to one another. Referring again to Fig. 4, the rotor 40a may have a skew angle 66 relative to the plane of symmetry 64, where the rotor 40a is oriented clockwise relative to the plane of symmetry 64 by the magnitude of the skew angle 66. In the embodiment shown, the skew angle 66 is 3°, but it is within the scope of the invention other skew angles may be used. When both rotors 40a,40b have a skew angle of 3°, when the machine 10 is assembled, the total skew of the first rotor 40a relative to the second rotor 40b is 6°. The skew angle 66 may be used to ensure that the magnets 48a of the first rotor 40a are properly oriented relative to the magnets 48b of the second rotor 40b, to achieve desired angular phasing between the rotors 40a,40b and the stator 38. The skew angle 66 is achieved by changing the location of one or both of the engagement splines 46a on the shaft 12 (shown in Fig. 2). More specifically, the shaft 12 may be manufactured such that the location of the engagement splines 46a may be offset relative to one another by an angular distance which corresponds to the skew angle 66, such that when mounted on the shaft 12, the rotors 40a,40b are offset from one another by the same angular distance which corresponds to the skew angle 66. Providing or adjusting the skew angle 66 by changing the angular distance between the engagement splines 46a allows the rotors 40a,40b to be identically manufactured components, while still achieving the desired skew angle 66.

The machine 10 also includes two locknuts 52a,52b, each having an inner threaded surface 54a,54b, respectively. The first locknut 52a is attached to the shaft 12 such that the inner threaded surface 54a of the locknut 52a is engaged with a corresponding outer threaded surface 56a of the shaft 12. The second locknut 52b is attached to the shaft 12 such that the inner threaded surface 54b of the locknut 52b is engaged with a corresponding outer threaded surface 56b of the shaft 12. The locknuts 52a,52b are rotated to apply compressive force to the inner flange portions 42a,42b in the direction shown by arrows 58, and the inner flange portions 42a,42b are in contact with the inner race 20a,20b of each bearing assembly 18a, 18b such that the inner flange portions 42a,42b and the inner race 20a,20b of each bearing assembly 18a, 18b is compressed between the locknuts 52a,52b, respectively.

During assembly, the bearing assemblies 18a, 18b are first mounted to the shaft 12, as described above. Next, the stator 38 is mounted to the bearing assemblies 18a, 18b using the inner ring 26 and bearing nut 34 as previously described. The rotors 40a,40b and the outer plate 50 are then assembled to the shaft 12, and secured in place using the locknuts 52a,52b as described above. Once assembled, the desired stack-up of the first rotor 40a, the stator 38, and the second rotor 40b results in a clearance, or gap 60a between the first plurality of magnets 48a and the stator 38, and another gap 60b between the stator 38 and the second plurality of magnets 48b. The assembly of the stator 38 using the inner ring 26 and the bearing nut 34 along with the keyway features provides the desired width for each gap 60a,60b.

The final steps for assembly include inserting the assembled shaft 12, bearing assemblies 18a, 18b, stator 38, bearing nut 34, rotors 40a,40b, and locknuts 52a,52b into an outer housing 62. More specifically, the stator 38 is mounted to the inside of the outer housing 62.

The present invention is a yokeless and segmented armature axial flux electric machine 10 having a shaft 12, and at least one bearing assembly, or in the embodiment shown two bearing assemblies 18a, 18b, mounted to the shaft 12. A stator 38 is mounted to the bearing assemblies 18a, 18b using an inner ring 26 of the stator 38 and a bearing nut 34. A first rotor 40a and a second rotor 40b are then mounted to the shaft 12 such that a plurality of magnets 48a of the first rotor 40a is properly oriented relative to a plurality of magnets 48b of the second rotor 40b. The first rotor 40a and the second rotor 40b are mounted to the shaft 12 using a keyway feature, where each keyway feature includes an engagement spline 46a integrally formed as part of the shaft 12 which is engaged with an engagement surface 46b formed as part of the respective rotor 40a,40b.

The description of the invention is merely exemplary in nature and, thus, variations that do not depart from the gist of the invention are intended to be within the scope of the invention. Such variations are not to be regarded as a departure from the spirit and scope of the invention.

## Claims

1. A yokeless and segmented armature axial flux electric machine (10), comprising:
- a shaft (12);
- at least one bearing assembly (18a, 18b) mounted to the shaft (12);
- a stator (38);
- at least one rotor (40a,40b) mounted to the shaft (12) such that the at least one rotor (40a,40b) is adjacent the stator (38) and the at least one bearing assembly (18a, 18b), and there is a gap (60a,60b) between the at least one rotor (40a,40b) and the stator (38);
- a connection structure connecting the stator (38) and the at least one rotor (40a,40b) to the shaft (12);
- wherein the at least one rotor (40a,40b) and the shaft (12) rotate relative to the stator (38).

2. The yokeless and segmented armature axial flux electric machine (10) of claim 1, the connection structure further comprising:
- at least one engagement spline (46a) integrally formed as part of the shaft (12); and
- at least one engagement surface (46b) integrally formed as part of the at least one rotor (40a,40b);
- wherein the at least one engagement spline (46a) is in contact with the engagement surface (46b) when the at least one rotor (40a,40b) is mounted to the shaft (12).

3. The yokeless and segmented armature axial flux electric machine (10) of one of the preceding claims, further comprising:
- a plurality of external splines (14a,14b) integrally formed as part of the shaft (12), such that the at least one engagement spline (46a) is located between two of the plurality of external splines (14a, 14b); and
- a plurality of inner splines (44a,44b) integrally formed as part of the at least one rotor (40a,40b), and the engagement surface (46b) is located between two of the plurality of inner splines (44a,44b);
- wherein the plurality of external splines (14a, 14b) are engaged with the plurality of inner splines (44a,44b) when the at least one rotor (40a,40b) is mounted to the shaft (12).

4. The yokeless and segmented armature axial flux electric machine (10) of one of the preceding claims, the at least one rotor (40a,40b) further comprising:
- a first rotor (40a) mounted to the shaft (12) such that the first rotor (40a) is adjacent the stator (38) and the at least one bearing assembly (18a, 18b), and there is a first gap (60a) between the first rotor (40a) and the stator (38); and
- a second rotor (40b) mounted to the shaft (12) such that the second rotor (40b) is adjacent the stator (38) and the at least one bearing assembly (18a, 18b) and there is a second gap (60b) between the second rotor (40b) and the stator (38);
- wherein the width of the first gap (60a) is approximately the same as the width of the second gap (60b).

5. The yokeless and segmented armature axial flux electric machine (10) of one of the preceding claims, wherein the first rotor (40a) is in a mirrored orientation relative to the second rotor (40b).

6. The yokeless and segmented armature axial flux electric machine (10) of one of the preceding claims, the connection structure further comprising:
- a second engagement spline (46a) integrally formed as part of the shaft (12) on the opposite side of a mounting surface (16) in reference to the at least one engagement spline (46a); and
- a second engagement surface (46b) integrally formed as part of the second rotor (40a,40b), the at least one engagement surface integrally formed as part of the first rotor (40a);
- wherein the second engagement spline (46a) is in contact with the second engagement surface (46b) when the second rotor (40b) is mounted to the shaft (12).

7. The yokeless and segmented armature axial flux electric machine (10) of one of the preceding claims, further comprising:
a skew angle (66);
wherein the at least one engagement spline (46a) and the second engagement spline (46a) are offset relative to one another by an angular distance such that when the when the first rotor (40a) and the second rotor (40b) are mounted on the shaft 12, the first rotor (40a) and the second rotor (40b) are angularly offset from one another by a magnitude which corresponds to the skew angle 66.

8. The yokeless and segmented armature axial flux electric machine (10) of one of the preceding claims, the plurality of external splines (14a, 14b) further comprising:
- a first plurality of external splines (14a) integrally formed as part of the shaft (12), the at least one engagement spline (46a) disposed between two of the first plurality of external splines (14a); and
- a second plurality of external splines (14b) integrally formed as part of the shaft (12), the second engagement spline (46a) disposed between two of the second plurality of external splines (14a);
- wherein the first rotor (40a) is mounted to the first plurality of external splines (14a) and the second rotor (40b) is mounted to the second plurality of external splines (40b).

9. The yokeless and segmented armature axial flux electric machine (10) of one of the preceding claims, further comprising:
- a plurality of inner splines (44a) integrally formed as part of the first rotor (40a), the at least one engagement surface (46b) disposed between two of the plurality of inner splines (44a) integrally formed as part of the first rotor (40a); and
- a plurality of inner splines (44b) integrally formed as part of the second rotor (40b), the second engagement surface (46b) disposed between two of the plurality of inner splines (44b) integrally formed as part of the second rotor (40b);
- wherein the first plurality of external splines (14a) are engaged with the plurality of inner splines (44a) integrally formed as part of the first rotor (40a) when the first rotor (40a) is mounted to the shaft (12), and the a second plurality of external splines (14b) are engaged with the plurality of inner splines (44b) integrally formed as part of the second rotor (40b) when the second rotor (40b) is mounted to the shaft (12).

10. The yokeless and segmented armature axial flux electric machine (10) of one of the preceding claims, further comprising:
- a first plurality of magnets (48a) being part of the first rotor (40a); and
- a second plurality of magnets (48b) being part of the second rotor (40b);
- wherein the first plurality of magnets (48a) is aligned with the second plurality of magnets (48b) when the first rotor (40a) is mounted to the shaft (12) and when the second rotor (40b) is mounted to the shaft (12).

11. A method for assembling a yokeless and segmented armature axial flux electric machine (10), comprising the steps of:
- providing a shaft (12);
- providing a first rotor (40a)
- providing a second rotor (40b);
- providing a stator (38);
- providing at least one bearing assembly (18a, 18b);
- mounting the at least one bearing assembly (18a, 18b) to the shaft (12);
- mounting the first rotor (40a) to the shaft (12) such that part of the first rotor (40a) is adjacent the at least one bearing assembly (18a, 18b), and another part of the first rotor (40a) is adjacent the stator (38) and there is a first gap (60a) between the first rotor (40a) and the stator (38);
- mounting the second rotor (40b) to the shaft (12) such that part of the second rotor (40b) is adjacent at least one bearing assembly (18a, 18b), and another part of the second rotor (40b) is adjacent the stator (38) and there is a second gap (60a) between the second rotor (40b) and the stator (38).

12. The method of claim 11, further comprising the steps of mounting first rotor (40a) and the second rotor (40b) such that the first rotor (40a) in a mirrored orientation relative to the second rotor (40b).

13. The method of one of the preceding claims, further comprising the steps of:
- providing a skew angle (66);
- providing a first plurality of magnets (48a) being part of the first rotor (40a);
- providing a second plurality of magnets (48b) being part of the second rotor (40b);
- mounting the first rotor (40a) to the shaft (12) and mounting the second rotor (40b) to the shaft (12) such that the first plurality of magnets (48a) and the second plurality of magnets (48b) are offset by the skew angle (66).

14. The method of one of the preceding claims, further comprising the steps of:
- providing a first engagement spline (46a) integrally formed as part of the shaft (12);
- providing a second engagement spline (46b) integrally formed as part of the shaft (12);
- providing an engagement surface (46b) integrally formed as part of the first rotor (40a); and
- providing an engagement surface (46b) integrally formed as part of the second rotor (40b);
- wherein the first engagement spline (46a) is in contact with the engagement surface (46b) integrally formed as part of the first rotor (46a) when the first rotor (40a) is mounted to the shaft (12), and the second engagement spline (46a) is in contact with the engagement surface (46b) integrally formed as part of the second rotor (46a) when the second rotor (40b) is mounted to the shaft (12).
